(19) **Europäisches Patentamt**
**European Patent Office**
**Office européen des brevets**

(11) **EP 3 584 517 B1**

(12) **FASCICULE DE BREVET EUROPEEN**

(45) Date de publication et mention de la délivrance du brevet:
**22.12.2021 Bulletin 2021/51**

(21) Numéro de dépôt: **19181018.3**

(22) Date de dépôt: **18.06.2019**

(51) Int Cl.:
**F25B 25/00** (2006.01)    **F25B 15/02** (2006.01)
**F25B 15/04** (2006.01)    **F25B 40/00** (2006.01)
**F25B 49/04** (2006.01)    **F25B 27/02** (2006.01)
**F25B 30/04** (2006.01)

(54) **SYSTÈME COMPRENANT UNE MACHINE À ABSORPTION POUR LA PRODUCTION DE FROID À PARTIR DE LA CHALEUR FATALE DE GAZ D'ÉCHAPPEMENT D'UN VÉHICULE COMPRENANT UN MODULE DE STOCKAGE DE L'ÉNERGIE THERMIQUE, UN PROCÉDÉ D'UTILISATION DU SYSTÈME ET UNE UTILISATION DU SYSTÈME**

SYSTEM, DAS EINE ABSORPTIONSMASCHINE FÜR DIE KÄLTEERZEUGUNG AUS DER ABWÄRME VOM ABGAS EINES FAHRZEUGS UND EIN WÄRMEENERGIE-SPEICHERMODUL UMFASST, VERFAHREN ZUR VERWENDUNG DES SYSTEMS UND EINE VERWENDUNG DES SYSTEMS

SYSTEM COMPRISING AN ABSORPTION MACHINE FOR REFRIGERATION FROM THE FREE HEAT OF EXHAUST GASES OF A VEHICLE COMPRISING A MODULE FOR STORING THERMAL ENERGY, A METHOD OF USING THE SYSTEM AND A USE THE SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.06.2018 FR 1855393**

(43) Date de publication de la demande:
**25.12.2019 Bulletin 2019/52**

(73) Titulaire: **Commissariat à l'Energie Atomique et aux Energies Alternatives**
**75015 Paris (FR)**

(72) Inventeurs:
• **PHAN, Hai Trieu**
**38054 GRENOBLE Cedex 09 (FR)**
• **BOUDEHENN, François**
**38054 GRENOBLE Cedex 09 (FR)**

(74) Mandataire: **Brizio Delaporte, Allison**
**Cabinet Hautier**
**20, rue de la Liberté**
**06000 Nice (FR)**

(56) Documents cités:
**EP-A1- 3 225 937**    **WO-A1-2015/060404**
**WO-A1-2017/219140**    **DE-A1- 4 307 363**

**Description**

DOMAINE TECHNIQUE DE L'INVENTION

L'invention concerne le domaine de la production de froid et notamment un système comprenant un dispositif de climatisation comprenant une machine à absorption pour la production de froid à partir de la chaleur fatale de gaz d'échappement d'un véhicule comprenant un module de stockage de fluide.

Elle trouve pour une application particulièrement avantageuse pour les véhicules comprenant un moteur thermique, plus précisément un moteur à combustion interne libérant des gaz d'échappement.

ÉTAT DE LA TECHNIQUE

La climatisation nécessite une grande quantité d'énergie. Or, dans les véhicules à moteur thermique comme les moteurs à combustion interne, l'énergie est tirée des carburants tels que l'essence ou le diesel. L'utilisation de la climatisation conduit ainsi à une forte augmentation de la consommation en carburant du véhicule ce qui présente un surcout pour l'utilisateur et une augmentation de la pollution. Il est connu, malgré l'amélioration des moteurs thermiques, qu'une grande partie de l'énergie thermique disponible dans un carburant se transforme en chaleur via les gaz d'échappement ou le radiateur ou en perte de frottements. Cette chaleur est appelée énergie ou chaleur fatale.

On connait du document Koehler et al. 1997, Absorption refrigeration system for mobile applications utilizing exhaust gases, Heat and Mass Transfer 32, pp. 333-340, l'utilisation d'une machine à absorption dont le générateur est chauffé par les gaz d'échappement permettant ainsi une production de froid. En plus, le document DE 43 07 363 A1 divulgue un système selon le préambule de la revendication 1.

Toutefois, ce type de dispositif ne donne pas entière satisfaction en ce que la production de froid n'est pas stable lors du fonctionnement du véhicule.

Il existe donc le besoin de proposer une solution qui permette de produire du froid dans un véhicule à partir des gaz d'échappement du moteur thermique en levant au moins en partie, les limitations précédemment exposées.

RÉSUMÉ DE L'INVENTION

Pour atteindre cet objectif, selon un mode de réalisation, la présente invention prévoit un système selon la revendication 1 comprenant

- une ligne d'échappement de gaz d'un moteur à combustion interne de véhicule et
- un dispositif de climatisation comprenant une machine à absorption pour la production de froid comprenant un absorbeur, un générateur, un condenseur, un évaporateur et un circuit de circulation fluidique apte à recevoir une solution de travail comprenant un fluide frigorigène et un absorbant, le circuit de circulation fluidique reliant le générateur au condenseur, le condenseur à l'évaporateur, l'évaporateur à l'absorbeur et l'absorbeur au générateur dans laquelle :

  ◦ le générateur est configuré pour vaporiser le fluide frigorigène de la solution de travail par transfert de chaleur d'une source de chaleur comprenant la chaleur fatale de gaz d'échappement d'un moteur à combustion interne destiné à circuler dans la ligne d'échappement de gaz
  ◦ le condenseur est configuré pour condenser le fluide frigorigène à l'état de vapeur issu du générateur,
  ◦ l'évaporateur est configuré pour vaporiser le fluide frigorigène issu du condenseur par transfert de chaleur d'une source de chaleur secondaire et produire une énergie frigorifique,
  ◦ l'absorbeur est configuré pour condenser le fluide frigorigène à l'état de vapeur issu de l'évaporateur pour permettre son absorption par la solution de travail,
  ◦ au moins un module de stockage thermique, recevant un fluide de stockage, agencé en amont du générateur, et un module de régulation du module de stockage configuré pour réguler le stockage et le déstockage du fluide de stockage dans le module de stockage de sorte à fournir au générateur une puissance de source de chaleur de consigne et/ou qu'une énergie frigorifique cible soit produite par l'évaporateur.

Le module de stockage est un module de stockage thermique agencé en amont de la machine à absorption. Plus spécifiquement, en amont du générateur.

Préférentiellement, le fluide est un fluide de stockage différent du fluide frigorigène.

C'est-à-dire que le système comprend au moins un module de stockage thermique de la source de chaleur comprenant la chaleur fatale des gaz d'échappement.

Selon une variante, le système est caractérisé en ce qu'il comprend au moins un module de stockage du fluide frigorigène en connexion fluidique avec le circuit de circulation fluidique de la machine à absorption et un module de régulation du module de stockage configuré pour assurer la dérivation au moins partielle du fluide frigorigène depuis le circuit de circulation fluidique vers le module de stockage et inversement du module de stockage vers le circuit de circulation fluidique de sorte qu'une énergie frigorifique cible soit produite par l'évaporateur.

Avantageusement, le fluide est le fluide frigorigène de la solution de travail circulant dans le circuit de circulation fluidique. Le module de stockage est raccordé fluidiquement au circuit de circulation fluidique, avantageusement en aval du générateur et en amont de l'évaporateur, plus précisément entre l'aval du condenseur et l'amont de l'évaporateur.

Suivant l'invention le système comprend au moins un module de stockage de fluide de stockage est agencé en amont du générateur au niveau de la source de chaleur comprenant la source de chaleur fatale des gaz d'échappement d'un moteur thermique à combustion interne d'un véhicule, ou selon des exemples, ne faisant pas partie de l'invention, telle que définie dans les revendications, en aval du générateur et en aval de l'évaporateur au niveau de la source de chaleur secondaire, ou en aval du générateur et en amont de l'évaporateur sur le circuit de circulation fluidique, plus précisément entre l'aval du condenseur et l'amont de l'évaporateur.

La présence du module de stockage permet de restituer une puissance de froid stable malgré une source de chaleur discontinue ou de puissance variable issue des gaz d'échappement.

En effet, les gaz d'échappement sortent d'un moteur thermique à combustion interne à haute température (entre 200 °C et 700 °C) avec un débit variable selon le mode de fonctionnement du moteur. Pour récupérer la puissance disponible des gaz, une machine absorption est agencé en sur une ligne d'échappement de gaz du moteur. La source de chaleur est donc discontinue si le moteur s'arrête et variable lors que le moteur fonctionne à différent régime. Cette puissance de chaleur va ensuite être transportée dans différents composants de la machine absorption permettant ainsi de produire une puissance froide au niveau de l'évaporateur.

La variation de la puissance des gaz d'échappement entraine une variation de la puissance froide. Avec le module de stockage revendiqué, la production d'énergie frigorifique ou puissance froide peut être régulée en stockant ou déstockant de l'énergie thermique ou en stockant et déstockant le fluide de travail de la machine à absorption.

Le système selon l'invention comprend un module de régulation permettant après définition d'une valeur cible ou de consigne de climatisation ou puissance froide de piloter le stockage de l'énergie pour atteindre ladite valeur cible.

Le système de climatisation selon l'invention permet de manière optimale de réguler la puissance froide sans créer de perte de charge importante sur la circulation des gaz d'échappement.

Par ailleurs, le système selon l'invention permet un refroidissement des gaz d'échappement qui assure une meilleure tenue mécanique du système d'échappement dans le temps.

Suivant un autre aspect, la présente invention concerne un procédé selon la revendication 3 d'utilisation d'un système dans lequel :

- le générateur vaporise le fluide frigorigène de la solution de travail par transfert de chaleur de la source de chaleur comprenant la chaleur fatale de gaz d'échappement circulant dans la ligne d'échappement de gaz
- le condenseur condense le fluide frigorigène à l'état de vapeur issu du générateur,
- l'évaporateur vaporise le fluide frigorigène issu du condenseur par transfert de chaleur d'une source de chaleur secondaire et produit une énergie frigorifique,
- l'absorbeur condense le fluide frigorigène à l'état de vapeur issu de l'évaporateur pour permettre son absorption par l'absorbant,

caractérisé en ce que le procédé comprend :

- une étape de stockage du fluide de stockage par le au moins un module de stockage lorsqu'une puissance de la source de chaleur est supérieure à une puissance d'énergie frigorifique cible, et
- une étape de déstockage du fluide de stockage par le au moins un module de stockage lorsqu'une puissance de la source de chaleur est inférieure à une puissance d'énergie frigorifique cible.

C'est à dire dans lequel lorsque la différence entre la source de chaleur la chaleur fatale des gaz d'échappement disponible et l'énergie frigorifique cible est positive, la chaleur fatale des gaz d'échappement ou l'énergie frigorifique produite par l'évaporateur est stockée dans le module de stockage.

C'est à dire dans lequel lorsque la différence entre la chaleur fatale des gaz d'échappement disponible et l'énergie frigorifique cible est négative, la chaleur fatale des gaz d'échappement ou l'énergie frigorifique stockée dans le module de stockage est déstockée du module de stockage permettant ainsi de compenser au moins partiellement la différence.

Suivant un autre aspect, la présente invention concerne l'utilisation selon la revendication 4 d'un système tel que décrit ci-dessus pour refroidir l'air d'un habitacle de véhicule avantageusement à partir de la chaleur fatale des gaz d'échappement d'un moteur thermique à combustion thermique de véhicule.

L'adaptation du système selon l'invention dans un véhicule nécessite la prise en compte de nombreuses contraintes liées à l'application en question telle que la mobilité du véhicule, un espace réduit pour l'installation, un environnement encombré d'autres éléments du véhicule, la sécurité d'utilisation pour les usagers...

Suivant un autre aspect, l'invention concerne un véhicule comprenant un moteur thermique à combustion interne et un système tel que décrit ci-dessus.

BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :

La FIGURE 1 illustre un mode de réalisation d'un système selon l'invention comprenant une machine à absorption.
La FIGURE 2 illustre la première variante du premier mode de réalisation d'un module de stockage du système selon l'invention.
La FIGURE 3 illustre la deuxième variante du premier mode de réalisation d'un module de stockage du système, ne faisant pas partie de l'invention, telle que définie dans les revendications.
La FIGURE 4 illustre la première variante du deuxième mode de réalisation d'un module de stockage du système, ne faisant pas partie de l'invention, telle que définie dans les revendications.
La FIGURE 5 illustre la deuxième variante du mode de réalisation d'un module de stockage du système, ne faisant pas partie de l'invention, telle que définie dans les revendications.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

DESCRIPTION DÉTAILLÉE DE L'INVENTION

Avant d'entamer une revue détaillée de modes de réalisation de l'invention, sont énoncées ci-après des caractéristiques optionnelles qui peuvent éventuellement être utilisées en association ou alternativement :

- Le module de stockage est disposé en amont du générateur 105 et en conduction thermique de la ligne d'échappement des gaz 300 de sorte à stocker la chaleur fatale des gaz d'échappement en amont de la machine à absorption.
- Le module de stockage comprend un réservoir de stockage 200 et un circuit de connexion fluidique assurant la connexion fluidique entre le réservoir de stockage 200 et le générateur 105, le réservoir de stockage 200 recevant le fluide de stockage est traversé par la ligne d'échappement des gaz 300 pour un stockage direct de la chaleur fatale.
- Le module de régulation comprend au moins une pompe 201 et une vanne trois voies 202 agencées sur le circuit de connexion fluidique, la vanne trois voies 202 comprend une voie connectée fluidiquement au réservoir de stockage 200, une voie connectée fluidiquement à une entrée 11 du générateur 105 et une voie connectée fluidiquement à une sortie 12 du générateur 105 de sorte à réguler la température du fluide de stockage en entrée 11 du générateur 105 en contrôlant la proportion de fluide de stockage en provenance du réservoir de stockage 200 et la proportion de fluide de stockage en provenance de la sortie 12 du générateur 105.

Selon un premier aspect ne faisant pas partie de l'invention telle que définie dans les revendications :

- Le module de stockage comprend - un réservoir de stockage 200 et - un dispositif d'échange de chaleur comprenant : * un échangeur de chaleur 205 agencé entre le réservoir de stockage 200 et la ligne d'échappement des gaz 300, * un circuit de connexion fluidique assurant la connexion fluidique entre le réservoir de stockage 200 et le générateur 105 et * un circuit fluidique caloporteur sur lequel est raccordé fluidiquement l'échangeur de chaleur 205 et avec lequel le réservoir de stockage 200 est en conduction thermique.
- Avantageusement, le module de régulation comprend une pompe 203 agencée entre le réservoir de stockage 200 et l'échangeur de chaleur 205 configuré pour stocker la chaleur fatale des gaz d'échappement dans le réservoir de stockage.
- Avantageusement, le module de régulation comprend une pompe 204 agencée entre le générateur 105 et le réservoir de stockage 200 configuré pour déstocker la chaleur fatale du réservoir de stockage 200 en régulant le débit de fluide de stockage en entrée 11 du générateur 105.
- Avantageusement, le fluide de stockage est de l'eau pressurisée ou un sel liquide ou un matériau à changement de phase configuré pour être utilisé à des températures comprises entre 150°C et 300°C ou entre 80° et 160°C. A titre d'exemple, le sel liquide ou le MCP est choisi parmi LiNO3, NaNO3, NaNO2 ou KNO3.

Selon un deuxième aspect ne faisant pas partie de l'invention telle que définie dans les revendications :

- le module de stockage est agencé en aval de l'évaporateur 108, entre ledit évaporateur 108 et la source de chaleur secondaire, de sorte à stocker l'énergie frigorifique produite par l'évaporateur 108, la source de chaleur secondaire comprenant une conduite de circulation d'air 301 agencée en conduction thermique avec le module de stockage.
- Avantageusement, le module de stockage comprend : - un réservoir de stockage 200 et - un dispositif d'échange de chaleur comprenant : * un échangeur de chaleur 208 agencé entre le réservoir de stockage 200 et la conduite de circulation d'air 301, * un circuit de connexion fluidique assurant la connexion fluidique entre le réservoir de stockage 200 et l'évaporateur 108 et * un circuit fluidique frigoporteur sur lequel est raccordé fluidiquement l'échangeur de chaleur 208 et avec lequel le réservoir de stockage 200 est en conduction thermique.
- Avantageusement, le module de régulation comprend une pompe 207 agencée entre l'évaporateur 108 et le réservoir de stockage 200 pour stocker l'énergie frigorifique produite par l'évaporateur 108 dans le réservoir de stockage 200 en régulant la température du fluide de stockage en entrée 15 et en sortie 16 de l'évaporateur 108.
- Avantageusement, le module de régulation comprend une pompe 206 agencée entre le réservoir de stockage 200 et l'échangeur de chaleur 208 configuré pour déstocker l'énergie frigorifique du réservoir de stockage 200 en régulant le débit du fluide de stockage dans l'échangeur de chaleur 208 en conduction thermique avec la conduite de circulation d'air 301.

  - Avantageusement, le fluide de stockage est de l'eau glycolée ou un matériau à changement de phase configuré pour être utilisé à des températures comprises entre -15°C et 10°C, à titre d'exemple des microcapsules d'eau.
  - Avantageusement, la source de chaleur comprend un élément d'apport thermique complémentaire d'une énergie calorifique complémentaire à la chaleur fatale des gaz d'échappement.

Préférentiellement, l'élément d'apport thermique complémentaire comprend au moins une résistance électrique agencée en amont du générateur sur la source de chaleur. Cette disposition permet avantageusement de compléter ou éventuellement totalement remplacer la chaleur fatale des gaz d'échappement par exemple à l'amont du véhicule, lorsque le module de stockage est vide, ne contient plus d'énergie pouvant être déstockée.

Avantageusement, le stockage ne comprend pas de stockage d'énergie mécanique ou électrochimique.

Le stockage est un stockage thermique.

Avantageusement, le stockage est un stockage chimique ou thermochimique d'énergie.

Le module de stockage comprend un réservoir de stockage recevant un fluide de stockage.

Avantageusement, le module de stockage stocke le fluide frigorigène.

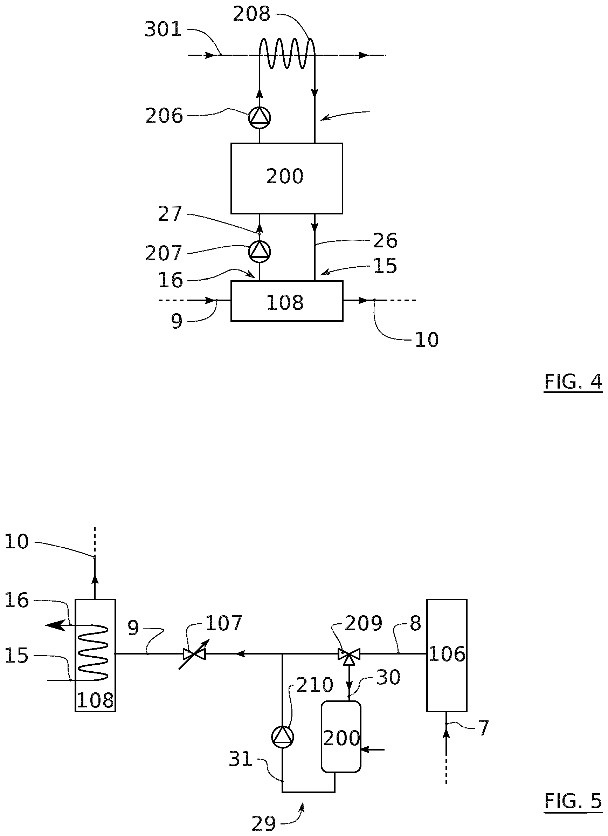

Selon un troisième aspect illustré à la figure 5 et non couvert par l'invention telle que définie dans les revendications :

- Le module de régulation du module de stockage comprend une vanne trois voies 209 assurant le raccordement fluidique entre le circuit de circulation fluidique et le module de stockage permettant une dérivation au moins partielle du fluide frigorigène vers le module de stockage.
- La vanne trois voies 209 comprend une voie en connexion fluidique avec l'aval du condenseur 106, une voie de connexion fluidique avec l'amont de l'évaporateur 108 et une voie de connexion avec le module de stockage.
- Avantageusement, dans lequel le module de stockage comprend un réservoir de stockage 200 apte à recevoir le fluide frigorigène et un circuit fluidique de dérivation 29 configuré pour raccorder fluidiquement le réservoir de stockage 200 au circuit de circulation fluidique de la machine à absorption en aval du condenseur 106 et en amont de l'évaporateur 108.
- Avantageusement, le module de régulation du module de stockage comprend au moins une pompe 210 avantageusement agencée sur ledit circuit fluidique de dérivation 29 en aval du réservoir de stockage 200 de sorte à réguler le déstockage du réservoir de stockage 200 en étant apte à transférer le fluide de stockage du réservoir de stockage 200 vers le circuit de circulation fluidique.
- Avantageusement, le module de stockage est raccordé fluidiquement au circuit de circulation fluidique de la machine à absorption entre l'aval du condenseur 106 et l'amont d'un détendeur 107 agencé en amont de l'évaporateur 108.
- Avantageusement, le module de stockage est raccordé fluidiquement au circuit de circulation fluidique de la machine à absorption entre un détendeur 107 agencé en amont de l'évaporateur 108 et l'évaporateur 108.
- Avantageusement, la solution de travail est un mélange d'ammoniac en tant que fluide frigorigène et d'eau en tant qu'absorbant comprenant un titre d'ammoniac (NH3) supérieur à 0.2 Avantageusement, la solution de travail est configurée pour être utilisée à des températures comprises entre -15°C et 60°C, préférentiellement - 15°C et 10°C ou 15°C et 60°C.

- Avantageusement, la source de chaleur comprend un élément d'apport thermique complémentaire d'une énergie calorifique complémentaire à la chaleur fatale des gaz d'échappement.
- Avantageusement, au cours de l'étape de stockage, la vanne trois voies 209 est en position de stockage total dans laquelle la voie de connexion fluidique avec l'amont de l'évaporateur 108 est totalement fermée et la voie de connexion avec le module de stockage est totalement ouverte, ou en position de stockage partiel dans laquelle la voie de connexion fluidique avec l'amont de l'évaporateur 108 est au moins partiellement ouverte et la voie de connexion avec le module de stockage est au moins partiellement ouverte.
Avantageusement, la pompe 210 est arrêtée.
- Avantageusement, au cours de l'étape de déstockage, la vanne trois voies 209 est en position de déstockage total dans laquelle la voie de connexion fluidique
avec l'amont de l'évaporateur 108 est totalement fermée et la voie de connexion avec le module de stockage est totalement fermée, la pompe 210 mettant en circulation le fluide frigorigène stocké dans le réservoir de stockage 200 vers le circuit de circulation fluidique ou en position de déstockage partiel dans laquelle la voie de connexion fluidique avec l'amont de l'évaporateur 108 est au moins partiellement ouverte et la voie de connexion avec le module de stockage est fermée, la pompe 210 mettant en circulation le fluide frigorigène stocké dans le réservoir de stockage 200 vers le circuit de circulation fluidique.

L'usage de l'article indéfini " un " ou " une " pour un élément ou une étape n'exclut pas, sauf mention contraire, la présence d'une pluralité, soit 2 au plus, de tels éléments ou étapes.

Dans la présente description, l'expression « A fluidiquement raccordé à B» est synonyme de" A est en connexion fluidique avec B" ne signifie pas nécessairement qu'il n'existe pas d'organe entre A et B. Les expressions "agencée sur" ou "sur" sont synonymes de "raccordé fluidiquement à".

L'amont et l'aval en un point donné sont pris en référence au sens de circulation du fluide dans le circuit.

L'invention concerne un système comprenant un dispositif de climatisation comprenant une machine à absorption pour la production de froid et une ligne d'échappement de gaz d'un moteur à combustion interne.

La climatisation est l'action de climatiser un espace, c'est-à-dire de maintenir, à des conditions déterminées de température et d'humidité notamment, et de régénérer l'air d'une enceinte au moyen d'une circulation d'air traité.

Le système selon l'invention permet de traiter un flux d'air par une machine à absorption produisant du froid de sorte à notamment refroidir un flux d'air.

Selon l'invention, la machine à absorption tire l'énergie nécessaire à son fonctionnement de la chaleur fatale de gaz d'échappement d'un véhicule et avantageusement d'un véhicule muni d'un moteur thermique à combustion interne.

Le système selon l'invention est destiné à traiter l'air, notamment le refroidir, d'un habitacle d'un véhicule. Ainsi, l'intérieur de l'habitacle peut être rafraichi par le système qui utilise l'énergie fatale des gaz d'échappement produits par le moteur thermique du véhicule.

Une machine à d'absorption est une pompe à chaleur à absorption thermique utilisant des couples réfrigérant/sorbant présentant de fortes affinités afin de remplacer la compression de vapeur des machines traditionnelles. Cette solution présente de faibles consommations électriques, l'énergie principale étant issue de la source thermique, permettant de limiter le coût de fonctionnement dans le cas de la valorisation d'une source d'énergie à bas coût ou de la chaleur fatale. De plus, les fluides frigorigènes utilisés dans les dispositifs à absorption ne présentent aucun ou de faible impact environnemental : ni sur le réchauffement climatique (GWP pour Global warning potential = 0), ni sur la couche d'ozone (ODP pour Ozone depletion potential = 0).

Ce type de dispositif fonctionne grâce à la faculté de certains liquides d'absorber (réaction exothermique) et de désorber (réaction endothermique) une vapeur. Elles utilisent également le fait que la solubilité de cette vapeur dans le liquide dépende de la température et de la pression. Ainsi, ces dispositifs utilisent comme fluide de travail un mélange binaire, dont l'un des composants est plus volatil que l'autre, et constitue le fluide frigorigène.

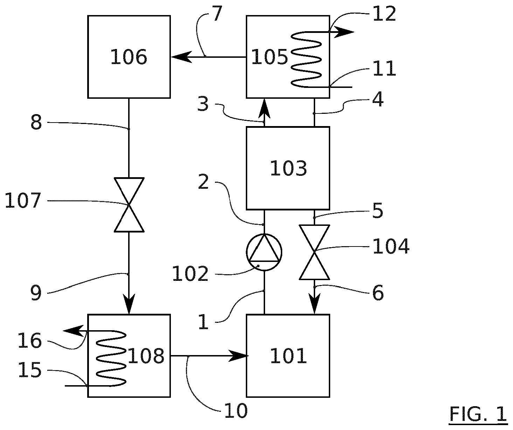

Une machine à absorption comprend donc quatre échangeurs principaux (générateur 105, absorbeur 101, condenseur 106 et évaporateur 108), et avantageusement de un à trois échangeurs secondaires. Le rôle des trois échangeurs secondaires est d'améliorer les performances de la machine telles que : un rectifieur, un économiseur 103, un sous-refroidisseur. Sur la figure 1, seul un économiseur 103 est illustré. Un rectifieur peut être ajouté entre le générateur 105 et le condenseur 106 et/ou un sous-refroidisseur entre le condenseur 106 et l'évaporateur 108. La machine à absorption comprend également au moins une pompe à solution 102 et au moins deux vannes de détente 104, 107. Ce type de machine fonctionne selon trois niveaux de température : un niveau de température basse correspondant à la production de froid à l'évaporateur 108, un niveau de température intermédiaire correspondant à la température de condensation du fluide frigorigène, mais également à celle d'absorption du fluide frigorigène par l'absorbant et un niveau de température élevé correspondant à la température motrice du générateur 105. Une machine à absorption fonctionne pour une part à haute pression entre la pompe en amont du générateur 105 et le détendeur 107, en aval du condenseur 106, et pour une autre part à basse pression entre le détendeur 107, en aval du condenseur 106 et la pompe 102 en amont du générateur 105.

Ce cycle thermodynamique est réalisable en raison de l'écart de pression de vapeur entre l'absorbant et le fluide frigorigène qui est variable en fonction de la température et de la pression. Cette variabilité permet d'avoir un écart de concentration entre la solution pauvre et la solution riche décrites ci-après. L'avantage de ce cycle à absorption est que la compression mécanique est remplacée par une compression thermochimique qui utilise de la chaleur, c'est-à-dire une source d'énergie primaire dégradée. Le seul apport d'énergie primaire nécessaire se situe au niveau de la pompe à solution 102, mais son travail est environ 96 fois inférieur au travail que le compresseur de vapeur doit fournir pour des conditions de fonctionnement similaires. La performance de ces dispositifs s'exprime de ce fait généralement en négligeant le travail mécanique fourni à la pompe devant les énergies thermiques mises en jeux par un coefficient de performance thermique (COPt$_h$) correspondant à l'énergie frigorifique produite à l'évaporateur (P$_E$) divisée par l'énergie thermique consommée au générateur (P$_G$) :

$$COP_{th} = \frac{P_E}{P_G}$$

Selon l'invention, la machine à absorption comprend une solution de travail fluide frigorigène/absorbant comprenant le couple ammoniac /eau (NH$_3$/H$_2$O). Les concentrations du fluide de frigorigène et de l'absorbant dans la solution de travail sont adaptées à la pression et la température du traitement d'air et inférieures à la concentration de cristallisation de la solution.

Préférentiellement, la solution de travail est préférentiellement un mélange d'ammoniac et d'eau comprenant un titre d'ammoniac (NH$_3$) supérieur à 0.2. Ce ratio est choisi avantageusement pour permettre une utilisation de la solution de travail dans une gamme de températures froides comprise avantageusement entre -15°C et 60°C préférentiellement entre -15°C et 10°C ou 15°C et 60°C.

Ce couple présente quant à lui une température de solidification basse, que ce soit celle de l'ammoniac ou celle du mélange ammoniac/eau. Ce couple est donc utilisable pour des applications de climatisation, mais aussi de réfrigération et il n'y a pas de cristallisation possible sur les plages de fonctionnement en pression et température. Par contre, pour ce couple, l'écart de pression de vapeur entre l'absorbant et le fluide frigorigène est faible. Il y a donc des traces d'eau emmenées avec la vapeur d'ammoniac en sortie du générateur nécessitant parfois la présence d'un rectifieur.

La solution de travail est dite riche, car la concentration en fluide frigorigène est plus importante que dans la solution de travail dite pauvre.

Une machine à absorption selon l'invention est décrite ci-après dont un exemple de réalisation est illustré en figure 1.

La machine à absorption selon l'invention comprend :

- Un générateur 105 configuré pour vaporiser le fluide frigorigène. Le générateur 105 est connecté fluidiquement à l'absorbeur 101 et au condenseur 106. Le générateur 105 comprend une connexion fluidique 3 avec l'absorbeur 101 et plus précisément avec l'économiseur 103 décrit ci-après permettant l'entrée de la solution de travail dite riche dans le générateur 105, préférentiellement directement. Le générateur 105 comprend une connexion fluidique 4 avec l'absorbeur 101 et plus précisément avec l'économiseur 103 décrit ci-après permettant la sortie de la solution de travail dite pauvre hors du générateur 105, préférentiellement directement. L'économiseur 103 étant lui-même avantageusement connecté fluidiquement 5, préférentiellement directement, à un détendeur 104 permettant de détendre la pression de la solution de travail dite pauvre avant qu'elle soit transmise à l'absorbeur 101 par la connexion fluidique 6 préférentiellement directement. Le générateur 105 comprend une connexion fluidique 7 avec le condenseur 106 permettant la sortie de la vapeur de fluide frigorigène hors du générateur 105, préférentiellement directement sauf par exemple en présence d'un rectifieur décrit ci-après. Le générateur 105 comprend également une entrée 11 et une sortie 12 de source chaude permettant l'apport de chaleur nécessaire à la vaporisation du fluide frigorigène. Selon l'invention, la source chaude ou source de chaleur comprend la chaleur fatale des gaz d'échappement d'un moteur à combustion interne d'un véhicule destinés avantageusement à circuler dans une ligne d'échappement des gaz. La source chaude provient au moins partiellement de l'énergie fatale des gaz d'échappement d'un moteur à combustion interne d'un véhicule. Selon une possibilité alternative, la source chaude comprend au moins potentiellement une source d'énergie complémentaire apportée par un élément d'apport d'énergie complémentaire telle une résistance permettant de chauffer la source de chaleur, par exemple en l'absence de chaleur fatale issue des gaz d'échappement.

La machine à absorption selon l'invention comprend :

- Un condenseur 106 configuré pour condenser la vapeur de fluide frigorigène. Le condenseur est connecté fluidiquement au générateur 105 et à l'évaporateur 108. Le condenseur 106 comprend une connexion fluidique 7 issue du générateur 105 permettant l'entrée de la vapeur de fluide frigorigène dans le condenseur 105, préférentiellement directement. Le condenseur 106 comprend une connexion fluidique 8 avec l'évaporateur 108, permettant la sortie du fluide frigorigène à l'état liquide, préférentiellement directement. Plus précisément, le condenseur 106 est connecté fluidiquement à un détendeur 107 et destiné à amener le fluide frigorigène à sa pression d'évaporation, il abaisse la pression du fluide. Le condenseur 106 comprend également une circulation d'air pour assurer son fonctionnement normal. Le changement de phase du fluide frigorigène de l'état vapeur à l'état liquide s'accompagne d'une libération de chaleur qui est transmise au flux d'air circulant par exemple autour de tube. L'air réchauffé est évacué du dispositif de climatisation.

- Avantageusement, la machine à absorption comprend un rectifieur disposé entre le générateur 105 et condenseur 106. Le rectifieur permet d'enlever par condensation les traces d'eau entraînées avec le fluide réfrigérant en sortie du générateur 105 et assure ainsi le bon fonctionnement de la machine.

- Avantageusement, la machine à absorption comprend un détendeur 107 agencé entre le condenseur 106 et l'évaporateur 108. Le détendeur 107 est configuré pour détendre le fluide frigorigène à l'état liquide issu du condenseur 106. Le détendeur 107 amène le fluide frigorigène à sa pression d'évaporation.

- Avantageusement, la machine à absorption comprend un sous-refroidisseur agencé entre le condenseur 106 et l'évaporateur 108. Le sous refroidisseur permet de récupérer de l'énergie et donc de réduire la taille de du condenseur 106 et de l'évaporateur 108 et ainsi d'améliorer de manière notable les performances de la machine. La pertinence de ce composant est fonction des températures de fonctionnement, la taille de la machine et le coût des échangeurs.

La machine à absorption selon l'invention comprend :

- Un évaporateur 108 configuré pour vaporiser le fluide frigorigène et produire une énergie frigorifique. L'évaporateur 108 est connecté fluidiquement au condenseur 106 et à l'absorbeur 101. L'évaporateur 108 comprend une connexion fluidique 9 issue du condenseur 106, plus précisément avec un détendeur 107, permettant l'entrée du fluide frigorigène à l'état liquide dans l'évaporateur 108, préférentiellement directement. L'évaporateur 108 comprend une connexion fluidique 10 avec l'absorbeur 101, permettant la sortie de la vapeur de fluide frigorigène, préférentiellement directement. L'évaporateur 108 comprend également une entrée 15 d'une source chaude secondaire à refroidir et une sortie 16 de la source secondaire refroidie. Le changement de phase du fluide frigorigène de l'état liquide à de l'état vapeur s'accompagne d'une transmission de chaleur de la source chaude, ou de chaleur, secondaire au fluide frigorigène. La source chaude secondaire transmet des calories et voit ainsi sa température s'abaisser. Selon l'invention, la source chaude secondaire à refroidir 15 est, soit directement ou indirectement, par au moins un intermédiaire tel un fluide frigoporteur à refroidir, de l'air à refroidir par exemple pour l'habitacle du véhicule.

La machine à absorption selon l'invention comprend :

- Un absorbeur 101 configuré pour condenser la vapeur de fluide frigorigène issue de l'évaporateur 108. L'absorbeur 101 est connecté fluidiquement à l'évaporateur 108 et au générateur 105. L'absorbeur 101 comprend une connexion fluidique 10 issue de l'évaporateur 108 permettant l'entrée du fluide frigorigène à l'état de vapeur dans l'absorbeur 101, préférentiellement directement. L'absorbeur 101 comprend une connexion fluidique 1 avec le générateur 105, plus précisément avec une pompe 102 destinée à mettre en circulation la solution de travail dans le circuit de circulation fluidique, plus précisément une solution de travail dite riche sort de l'absorbeur 101 en direction du générateur 105 par la connexion fluidique 1 préférentiellement directement connectée à la pompe 102. Avantageusement, la pompe 102 est connectée fluidiquement, préférentiellement directement, à un économiseur 103 au travers duquel la solution de travail dite riche est réchauffée avant d'être transmise au générateur 105. Avantageusement, l'économiseur 103 est un échangeur transmettant de la chaleur de la solution dite pauvre issue du générateur 105 vers la solution dite riche issue de l'absorbeur 101. L'économiseur 103 permet une récupération d'énergie permettant de réduire la taille de l'absorbeur 101 et du générateur 105 et ainsi améliorer de manière notable les performances de la machine. L'absorbeur 101 comprend une connexion fluidique 6 avec le générateur 105, plus précisément avec un détendeur 104. La connexion fluidique 6 permet l'entrée de la solution de travail dite pauvre issue du générateur 105 dans l'absorbeur 101, préférentiellement directement. Le changement de phase du fluide frigorigène de l'état vapeur à l'état liquide s'accompagne d'une libération de chaleur qui est transmise à un flux d'air circulant par exemple autour de tubes. L'air réchauffé est évacué du dispositif de climatisation.

Le système selon l'invention comprend au moins un module de stockage d'un fluide. Le module de stockage est destiné à stocker un fluide pour permettre un stockage thermique ou thermochimique. Le dispositif de stockage comprend au moins un module de stockage de la source de chaleur comprenant la chaleur fatale des gaz d'échappement et/ou au moins un module de stockage de l'énergie frigorifique produite par l'évaporateur et/ou au moins un module de stockage du fluide frigorigène de la solution de travail de la machine à absorption en aval du condenseur et en amont de l'évaporateur.

Le module de stockage comprend un réservoir de stockage 200 recevant un fluide de stockage.

Le module de stockage permet de réguler la climatisation, c'est-à-dire la production d'air refroidi. De cette manière, la production d'air refroidi n'est pas directement liée à la production de gaz d'échappement par le moteur thermique. Les variations de puissance de la chaleur fatale ne sont pas répercutées au niveau de la production d'air refroidi. La puissance de froid fournie à la climatisation est majoritairement indépendante des variations de la puissance de chaleur fatale des gaz d'échappement.

Lorsque la chaleur fatale ou plus précisément la puissance de la source de chaleur est supérieure à la puissance d'énergie frigorifique cible, la chaleur fatale des gaz d'échappement ou l'énergie frigorifique produite est stockée dans le module de stockage de l'invention. Lorsque la puissance de la source de chaleur est inférieure à la puissance d'énergie frigorifique cible, la chaleur fatale des gaz d'échappement ou l'énergie frigorifique stockée est déstockée du module de stockage de l'invention permettant ainsi de compenser au moins partiellement le manque de chaleur fatale ou le manque d'énergie frigorifique.

Selon l'invention, le système comprend une ligne d'échappement de gaz 300 pour conduire les gaz d'échappement du moteur thermique à l'extérieure. La machine à absorption est en conduction thermique avec la ligne d'échappement de gaz 300 de sorte à récupérer la chaleur fatale des gaz qui constitue au moins en partie la source de chaleur du générateur 105. La ligne d'échappement de gaz 300 est conduction thermique avec le générateur 105 soit directement c'est-à-dire que le générateur 105 est traversé par la ligne d'échappement, soit indirectement c'est-à-dire le dispositif comprend un échangeur de chaleur agencé entre le générateur et la ligne d'échappement de gaz pour transférer la chaleur fatale, des gaz d'échappement au générateur.

Le système comporte avantageusement une conduite de circulation d'air 301 pour conduire de l'air destiné à être refroidi à la machine à absorption. La conduite de circulation d'air est en conduction thermique avec l'évaporateur 108 soit directement c'est-à-dire que la conduite de circulation d'air 301 traverse l'évaporateur 108, soit indirectement c'est-à-dire que le dispositif comprend un échangeur de chaleur agencé entre l'évaporateur et la conduite de circulation d'air pour transférer l'énergie frigorifique produite par l'évaporateur à la conduite de circulation d'air 301 plus précisément à l'air destiné à être refroidi.

Suivant un premier mode de réalisation, la ligne d'échappement de gaz 300 est en conduction thermique avec un module de stockage. Ce premier mode de réalisation permet de stocker l'énergie fatale des gaz d'échappement avant leur utilisation par le générateur 105. Le stockage de l'énergie fatale se fait en amont de la machine à absorption. Le stockage est un stockage thermique par fluide de stockage. Selon une possibilité non couverte par l'invention telle que définie dans les revendications, le module de stockage est disposé entre le générateur 105 et la ligne d'échappement de gaz 300.

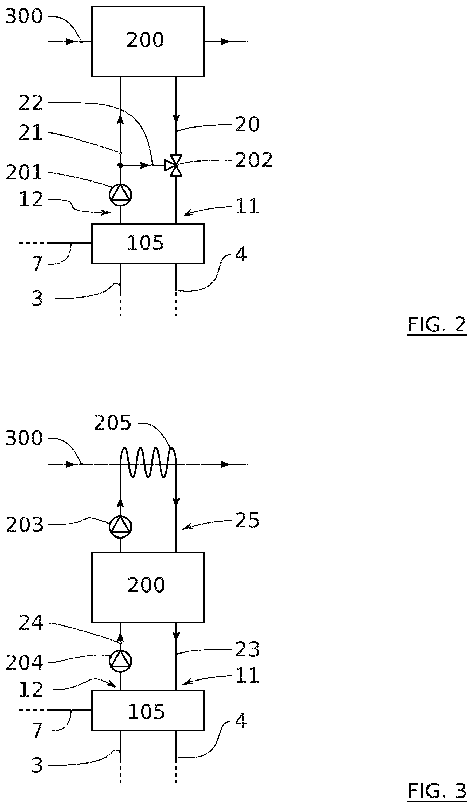

Suivant une première alternative de ce premier mode de réalisation, illustré en figure 2, le réservoir de stockage 200 du module de stockage est en conduction thermique direct avec la ligne d'échappement de gaz 300. Suivant une possibilité, la ligne d'échappement de gaz 300 traverse le réservoir de stockage 200 et plus précisément la ligne d'échappement de gaz est en contact du fluide de stockage contenu dans le réservoir. Le fluide de stockage peut être stocké à des hautes températures. En effet, les gaz d'échappement circulant dans la ligne d'échappement de gaz 300 ont une température comprise entre 400°C et 600°C. Le transfert thermique des gaz d'échappement vers le fluide de stockage se fait principalement par convection naturelle.

Le fluide de stockage est choisi parmi l'eau pressurisée ou un sel liquide ou un matériau à changement de phase, configuré pour permettre une utilisation dans une gamme de températures comprise avantageusement entre 150°C et 300°C. A titre d'exemple, le sel liquide ou le MCP est choisi parmi $LiNO_3$, $NaNO_3$, $NaNO_2$, $KNO_3$. Lorsque le fluide de stockage est de l'eau pressurisée, la pression est supérieure à 50 bar, préférentiellement de l'ordre de 100 bar pour une température de 300°C de sorte à éviter la vaporisation de celle-ci. A titre d'exemple non limitatif, le réservoir contient un volume d'eau de 6L.

Suivant cette première variante, le stockage de la chaleur fatale est permanente c'est-à-dire que dès que des gaz d'échappement circulent dans la ligne d'échappement 300, la chaleur fatale est transmise au fluide de stockage contenu dans le réservoir de stockage directement du fait de la conduction thermique directe entre la ligne d'échappement des gaz 300 et le réservoir de stockage 200.

Le module de stockage comprend un circuit de connexion fluidique assurant la connexion fluidique entre le réservoir de stockage 200 et le générateur 105. Le circuit de connexion fluidique comprend une connexion fluidique d'entrée du générateur 20 reliant une sortie du réservoir de stockage 200 à une entrée 11 du générateur 105 et comprend une connexion fluidique de sortie du générateur 21 reliant une sortie 12 du générateur 105 à une entrée du réservoir 200. Préférentiellement, le circuit de connexion fluidique comprend une connexion fluidique de piquage 22 reliant la connexion fluidique de sortie du générateur 21 à la connexion fluidique d'entrée du générateur 20 permettant d'assurer une dérivation au moins partielle du fluide de stockage en sortie 12 du générateur vers l'entrée 11 du générateur au lieu de l'envoyer vers le réservoir de stockage 200.

Le système selon l'invention comprend un module de régulation du module de stockage. Le module de régulation est destiné à permettre d'atteindre des valeurs de consignes de températures et/ou de puissance et/ou de débit avantageusement au moins en entrée du générateur 105.

Le module de régulation comprend au moins une pompe 201, préférentiellement agencée sur, c'est-à-dire raccordée fluidiquement avec, la connexion fluidique de sortie du générateur 21. La pompe 201 est destinée à mettre en circulation le fluide de stockage dans le circuit de connexion fluidique assurant ainsi sa circulation dans le générateur 105 et dans le réservoir de stockage 200.

Le module de régulation comprend au moins une vanne, dite vanne trois voies 202, comprenant au moins trois voies, agencée à la jonction de la connexion fluidique d'entrée du générateur 20 et de la connexion fluidique de piquage 22. La vanne trois voies 202 est destinée à réguler la température et/ou le débit de la source chaude en entrée 11 du générateur 105. La vanne trois voies 202 permet le contrôler le ratio de fluide de stockage issu du réservoir 200 et issu du générateur 105 qui est introduit en entrée 11 du générateur 105. La vanne trois voies 202 comprend une voie connectée fluidiquement à la sortie du réservoir de stockage 200, une voie connectée fluidiquement à une entrée 11 du générateur 105 et une voie connectée fluidiquement à une sortie 12 du générateur 105, plus précisément à la connexion fluidique de piquage 22. La vanne trois voies 202 permet de contrôler la proportion de fluide de stockage en provenance du réservoir de stockage 200 et la proportion de fluide de stockage en provenance de la sortie 12 du générateur 105 qui doit être introduite en entrée 11 du générateur 105 pour atteindre une puissance de chaleur cible ou de consigne.

À titre d'exemple préféré de cette première variante de ce premier mode de réalisation illustré à la figure 2, le fluide de stockage présente une température T réservoir de l'ordre de 300°C dans le réservoir de stockage 200, une température $T_{G, in}$ en entrée 11 du générateur 105 de l'ordre de 130°C et une température $T_{G, out}$ en sortie 12 du générateur 105 de l'ordre de 120°C.

Suivant une deuxième alternative de ce premier mode de réalisation illustrée en figure 3, ne faisant pas partie de l'invention, telle que définie dans les revendications, le réservoir de stockage 200 du module de stockage est en conduction thermique indirecte avec la ligne d'échappement de gaz 300. Le module de stockage comprend un dispositif d'échange de chaleur agencé entre la ligne d'échappement de gaz 300 et le réservoir de stockage 200. Le dispositif d'échange de chaleur est d'une part en conduction thermique avec la ligne d'échappement de gaz 300 et d'autre part en conduction thermique avec le réservoir de stockage 200. Le dispositif d'échange de chaleur comprend un échangeur de chaleur 205 destiné à récupérer la chaleur fatale des gaz d'échappement et avantageusement un circuit de fluide caloporteur 25 destiné à transférer la chaleur fatale récupérée par l'échangeur de chaleur au réservoir de stockage 200. Le dispositif d'échange de chaleur fonctionne en circuit fermé. Le dispositif d'échange de chaleur comprend un fluide caloporteur circulant.

Suivant cette deuxième alternative, le fluide caloporteur circule dans l'échangeur de chaleur 205 au niveau de la ligne d'échappement de gaz 300 puis dans le circuit de fluide caloporteur 25. L'échangeur de chaleur 205 prend la forme d'un tube circulant autour de la ligne d'échappement de gaz 300. Préférentiellement, le dispositif d'échange de chaleur, plus précisément le circuit de fluide caloporteur 25 est en conduction thermique direct avec le réservoir de stockage 200 plus précisément avec le fluide de stockage. Le circuit de fluide caloporteur 25 traverse avantageusement le réservoir de stockage 200 préférentiellement de sorte que le fluide de stockage soit en contact direct avec le circuit de fluide caloporteur 25, à titre d'exemple préféré de l'eau pressurisé.

Suivant cette deuxième alternative, le module de stockage comprend en outre un circuit de connexion fluidique destiné à assurer la connexion du réservoir de stockage 200 avec le générateur 105 de sorte à assurer le transfert de chaleur fatale du réservoir de stockage 200 au générateur 105. Le circuit de connexion fluidique comprend une connexion fluidique d'entrée 23 du générateur reliant une sortie du réservoir de stockage 200 à une entrée 11 du générateur 105 et une connexion fluidique de sortie du générateur 24 reliant une sortie 12 du générateur 105 à une entrée du réservoir de stockage 200.

Suivant cette deuxième alternative, le dispositif de climatisation comprend un module de régulation du module de stockage. Le module de régulation est destiné à permettre d'atteindre des valeurs de consignes de températures et/ou de puissance et/ou de débit avantageusement en entrée 11 du générateur 105.

Suivant une deuxième alternative, le module de régulation comprend avantageusement au moins une pompe 203 destinée à mettre en circulation le fluide caloporteur dans le dispositif d'échange de chaleur de sorte à assurer un transfert thermique par convection forcée au niveau notamment de l'échangeur de chaleur 205. La pompe 203 est configurée pour réguler la charge de la chaleur fatale dans le réservoir de stockage 200 avantageusement en contrôlant la circulation du fluide caloporteur dans le dispositif d'échange de chaleur en fonction de températures d'entrée et de sortie du fluide caloporteur de l'échangeur 205.

Suivant une deuxième alternative, le module de régulation comprend avantageusement au moins une pompe 204 configurée pour mettre en circulation le fluide de stockage dans le circuit de connexion. La pompe 204 est configurée pour réguler la décharge de la chaleur fatale stockée dans le réservoir de stockage 200 vers le générateur 105 avantageusement en contrôlant la circulation du fluide de stockage dans le circuit de connexion fluidique en fonction de températures et/ou débits d'entrée 11 et de sortie 12 du fluide de stockage du générateur 105 pour atteindre une puissance de chaleur cible au niveau du générateur 105.

Le fluide de stockage est choisi parmi l'eau pressurisée ou un sel liquide ou un matériau à changement de phase, configuré pour permettre une utilisation dans une gamme de températures comprise avantageusement entre 80°C et 160°C. A titre d'exemple, le sel liquide ou le MCP est choisi parmi $LiNO_3$, $NaNO_3$, $NaNO_2$, $KNO_3$. Lorsque le fluide de stockage est de l'eau pressurisée, la pression est supérieure à 2 bar, préférentiellement de l'ordre de 5 bar pour une température inférieure à 150° de sorte à éviter la vaporisation de celle-ci.

À titre d'exemple préféré, suivant cette deuxième alternative, le fluide de stockage présente une température T réservoir de l'ordre de 120°C - 130 °C dans le réservoir de stockage, une température $T_{G, in}$ en entrée du générateur de l'ordre de 130°C et une température $T_{G, out}$ en sortie du générateur de l'ordre de 120°C.

Suivant un deuxième mode de réalisation non couvert par l'invention telle que définie dans les revendications, la ligne d'échappement de gaz 300 est en conduction thermique directe avec le générateur 105 ou en conduction thermique indirecte préférentiellement sans module de stockage; Le fonctionnement du générateur 105 est directement lié à l'émission des gaz d'échappement.

Suivant ce deuxième mode de réalisation, ne faisant pas partie de l'invention, telle que définie dans les revendications, le stockage de l'énergie se fait avantageusement en aval du générateur 105, soit au niveau de la machine à absorption, soit en aval de ladite machine à absorption c'est-à-dire en aval de l'évaporateur 108.

Suivant une première alternative de ce deuxième mode de réalisation illustrée en figure 4, ne faisant pas partie de l'invention, telle que définie dans les revendications,

- le stockage de l'énergie se fait en aval du générateur 105 et en aval de la machine d'absorption c'est-à-dire en aval de l'évaporateur 108. Le stockage est un stockage de fluide de stockage. Le stockage est un stockage thermique d'énergie frigorifique.

Le module de stockage est agencé en aval de la machine à absorption, préférentiellement en aval de l'évaporateur 108. Le réservoir de stockage 200 du module de stockage est agencé en conduction thermique, préférentiellement indirect, avec la conduite de circulation d'air 301.

Le module de stockage comprend un circuit de connexion fluidique assurant la connexion fluidique de l'évaporateur 108 et du réservoir de stockage 200 de sorte à assurer le transfert de l'énergie frigorifique produite par l'évaporateur 108 au réservoir de stockage 200. Le circuit de connexion fluidique comprend une connexion fluidique d'entrée de l'évaporateur 26 reliant une sortie du réservoir de stockage 200 à une entrée 15 de l'évaporateur 108 et une connexion fluidique de sortie de l'évaporateur 27 reliant une sortie 16 de l'évaporateur 108 à une entrée du réservoir de stockage 200. Le module de stockage comprend en outre un dispositif d'échange de chaleur agencé entre la conduite de circulation d'air 301 et le réservoir de stockage 200. Le dispositif d'échange de chaleur est d'une part en conduction thermique avec la conduite de circulation d'air 301 et d'autre part en conduction thermique avec le réservoir de stockage 200. Le dispositif d'échange de chaleur comprend un échangeur de chaleur 208 et avantageusement un circuit de fluide frigoporteur 28 destiné à transférer l'énergie frigorifique produite par l'évaporateur 108 et stockée dans le réservoir de stockage 200 à la conduite de circulation d'air 301 et plus précisément à l'air circulant dans ladite conduite. Le dispositif d'échange de chaleur fonctionne en circuit fermé. Le dispositif d'échange de chaleur comprend un fluide frigoporteur circulant.

Le fluide frigoporteur circule dans l'échangeur de chaleur 208 au niveau de la conduite de circulation d'air 301 puis dans le circuit de fluide frigoporteur 28. L'échangeur de chaleur 205 prend la forme d'un tube circulant autour de la conduite de circulation d'air 301. Préférentiellement, le dispositif d'échange de chaleur, plus précisément le circuit de fluide frigoporteur 28 est en conduction thermique directe avec le réservoir de stockage 200 plus précisément avec le fluide de stockage. Le circuit de fluide frigoporteur 28 traverse avantageusement le réservoir de stockage 200 préférentiellement de sorte que le fluide de stockage soit en contact direct avec le circuit de fluide frigoporteur 28, à titre d'exemple le fluide frigoporteur 28 est de l'eau glycolée. Le dispositif de climatisation comprend un module de régulation du module de stockage. Le module de régulation est destiné à permettre d'atteindre des valeurs de consignes de températures et/ou de puissance et/ou de débits avantageusement sur la conduite de circulation d'air 301.

Le module de régulation comprend avantageusement une pompe 207 configurée pour mettre en circulation le fluide de stockage dans le circuit de connexion fluidique. La pompe 207 est destinée à charger l'énergie frigorifique produite par l'évaporateur 108 dans le réservoir de stockage 200. La pompe 207 est configurée pour réguler la charge de l'énergie frigorifique produite par l'évaporateur 108 dans le réservoir de stockage 200 avantageusement en contrôlant la circulation du fluide de stockage dans le circuit de connexion fluidique en fonction des températures et/ou débits d'entrée 15 et de sortie 16 du fluide de stockage de l'évaporateur 108.

Le module de régulation comprend avantageusement au moins une pompe 206 destinée à mettre en circulation le fluide frigoporteur dans le dispositif d'échange de chaleur de sorte à assurer un transfert thermique par convection forcée au niveau notamment de l'échangeur de chaleur 208. Le fluide frigoporteur circule dans l'échangeur de chaleur 208 au niveau de la conduite de circulation d'air 301 puis dans le circuit de fluide 28.

La pompe 206 est configurée pour réguler la décharge de l'énergie frigorifique produite par l'évaporateur 108 et stockée dans le réservoir de stockage 200, avantageusement en contrôlant la circulation du fluide frigoporteur dans le circuit de fluide frigoporteur 28 en fonction des températures et/ou puissance d'entrée et de sortie du fluide frigoporteur de l'échangeur 208.

Le fluide de stockage est choisi parmi l'eau glycolée ou bien un matériau à changement de phase, configuré pour permettre une utilisation dans une gamme de températures comprise avantageusement entre -15°C et 10°C. A titre d'exemple, le MCP comprend des microcapsules d'eau.

À titre d'exemple préféré, le fluide de stockage présente une température T réservoir de l'ordre de -5°C à 5°C dans le réservoir de stockage, une température $T_{E, in}$ en entrée de l'évaporateur de l'ordre de 5°C et une température $T_{E, out}$ en sortie de l'évaporateur de l'ordre de -5°C.

Suivant une deuxième alternative de ce deuxième mode de réalisation illustré en figure 5, ne faisant pas partie de l'invention, telle que définie dans les revendications, le module de stockage est agencé en aval du générateur 105 sur le circuit de circulation fluidique de la machine d'absorption. Le module de stockage stocke un fluide. Avantageusement, le module de stockage stocke le fluide frigorigène de la machine à absorption. Le fluide de stockage est le fluide frigorigène de la solution de travail.

Le module de stockage est destiné à stocker une puissance potentielle de production de froid. Le stockage ne comprend pas de stockage d'énergie mécanique ou électrochimique.

Le module de stockage est raccordé fluidiquement au circuit de circulation fluidique de la machine à absorption préférentiellement en aval du condenseur 106 et en amont de l'évaporateur 108. Le module de stockage est disposé soit en amont, soit en aval du détendeur 107. Dans cette alternative, le fluide de stockage est le fluide frigorigène issu du condenseur 106. Le fluide de stockage est préférentiellement un mélange d'ammoniac et d'eau comprenant avantageusement un titre d'ammoniac ($NH_3$) supérieur à 0.2. Cette proportion est choisie pour permettre une utilisation dans une gamme de températures comprise avantageusement entre -15°C et 60°C plus précisément entre -15°C et 10°C dans le cas où le module de stockage est agencé en aval du détendeur 107 ou 15°C et 60°C dans le cas où le module de stockage est agencé en amont du détendeur 107.

La figure 5 illustre la possibilité dans laquelle le module de stockage est agencé en amont du détendeur 107 c'est-à-dire sur la connexion fluidique 8 qui correspond à une zone à haute pression du circuit de circulation fluidique de la machine à absorption. Le module de stockage comprend un réservoir de stockage 200 également dénommé bouteille de stockage, et avantageusement un circuit fluidique de dérivation 29 assurant la connexion fluidique entre le circuit de circulation fluidique et le réservoir de stockage 200.

Le circuit fluidique de dérivation 29 comprend tel qu'illustrée en figure 5, une connexion fluidique d'entrée du réservoir 30 assurant la connexion fluidique entre le circuit de circulation fluidique et le réservoir 200 et une connexion fluidique de sortie du réservoir 31 assurant la connexion fluidique entre le réservoir 200 et le circuit de circulation fluidique.

Suivant une possibilité secondaire non illustrée et non couverte, le circuit fluidique de dérivation 29 consiste en une conduite unique assurant la connexion fluidique d'entrée et de sortie du réservoir avec le circuit de circulation fluidique.

Le système comprend avantageusement un module de régulation du module de stockage. Le module de régulation est destiné à réguler la dérivation au moins partielle du fluide frigorigène apte à circuler dans le circuit de circulation fluidique vers et depuis le module de stockage. Le module de régulation est destiné contrôler le stockage et le déstockage pour permettre d'atteindre des valeurs de consignes de températures et/ou de puissance en entrée de l'évaporateur 108. Le module de régulation comprend avantageusement au moins une pompe 210 et/ou une vanne trois voies 209.

La pompe 210 est agencée sur le circuit fluidique de dérivation 29, plus préférentiellement sur la connexion fluidique de sortie du réservoir 31. La pompe 210 est destinée à mettre en circulation le fluide frigorigène pour le transférer du réservoir de stockage 200 au circuit de circulation fluidique.

La pompe 210 est configurée pour réguler la décharge du fluide frigorigène du réservoir de stockage 200 vers le circuit de circulation fluidique et plus précisément vers l'évaporateur 108 avantageusement en contrôlant la circulation du fluide frigorigène dans la connexion fluidique de sortie du réservoir 31 en fonction de températures et/ou débits et/ou puissances cibles avantageusement au niveau de l'évaporateur 108 .

La vanne, est dite vanne trois voies 209 comprenant au moins trois voies, est agencée à la jonction entre le circuit de circulation fluidique et le circuit de dérivation 29. La vanne trois voies assure le raccordement fluidique du module de stockage plus précisément du réservoir de stockage 200 au circuit de circulation fluidique. La vanne trois voies 209 comprend une voie de connexion reliée fluidiquement à la sortie du condenseur 106, directement ou indirectement après le détendeur 107, une voie de connexion reliée fluidiquement à l'entrée de l'évaporateur 108 directement ou indirectement après le détendeur 107, une voie de connexion reliée fluidiquement au circuit fluidique de dérivation plus précisément à la connexion fluidique d'entrée du réservoir 30.

La vanne trois voies 209 est configurée pour réguler la charge du fluide frigorigène dans le réservoir de stockage 200 en contrôlant la quantité de fluide frigorigène issu du condenseur 106 qui doit être dérivée vers le module de stockage pour être avantageusement stockée dans le réservoir de stockage, ou qui doit être envoyée vers l'évaporateur 108. Le module de régulation, et plus précisément la vanne trois voies 209 et avantageusement la pompe 210, est configuré pour réguler le débit de fluide frigorigène en entrée de l'évaporateur 108 permettant de contrôler la production d'énergie frigorifique.

Avantageusement, la vanne trois voies 209 est configurée pour prendre alternativement différentes position pour assurer un stockage et un déstockage permettant d'atteindre une valeur de consigne, notamment en entrée d'évaporateur 108.

La vanne trois voies 209 peut prendre une position de stockage total dans laquelle la voie de connexion fluidique avec l'amont l'évaporateur 108 est totalement fermée et la voie de connexion avec le module de stockage est totalement ouverte; l'ensemble du fluide frigorigène circulant issu du condenseur 106 est dérivé vers le module de stockage. Préférentiellement, la pompe 210 est à l'arrêt de sorte à ne pas transfert le fluide frigorigène stocké dans le réservoir de stockage 200 vers le circuit de circulation fluidique.

Cette position est choisie lorsque la puissance de chaleur en entrée 11 du générateur 105 est supérieure à la valeur de consigne de production d'énergie frigorifique, plus précisément la valeur de consigne de production d'énergie frigorifique est nulle. Ainsi, le fluide frigorigène en sortie du condenseur 106 est totalement stocké, l'évaporateur 108 n'ayant pas besoin de produire de l'énergie frigorifique.

La vanne trois voies 209 peut prendre une position de stockage partiel dans laquelle la voie de connexion fluidique avec l'amont l'évaporateur 108 est au moins partiellement ouverte et la voie de connexion avec le module de stockage est au moins partiellement ouverte; une partie du fluide frigorigène circulant issu du condenseur 106 est dérivée vers le module de stockage, dénommée partie dérivée, et une partie est transmise à l'évaporateur 108, dénommée partie non dérivée. Préférentiellement, la pompe 210 est à l'arrêt de sorte à ne pas transférer le fluide frigorigène stocké dans le réservoir de stockage 200 vers le circuit de circulation fluidique. La proportion entre la partie dérivée et la partie non dérivée est fonction de la différence entre la puissance de chaleur en entrée du générateur 105 avantageusement majoritairement fourni par la chaleur fatale des gaz d'échappement, et l'énergie frigorifique cible. La portion de fluide frigorigène stocké dans le module de stockage représente maximum 50% de la quantité totale du fluide frigorigène circulant dans le circuit de circulation fluidique.

Cette position est choisie lorsque la puissance de chaleur en entrée 11 du générateur 105 est supérieure à la valeur de consigne de production d'énergie frigorifique. Ainsi, le fluide frigorigène en sortie du condenseur 106 est partiellement stocké, l'évaporateur 108 n'ayant pas besoin de tout le fluide frigorigène pour produire l'énergie frigorifique au niveau de la valeur de consigne.

La vanne trois voies 209 peut prendre une position de déstockage total dans laquelle la voie de connexion fluidique avec l'amont l'évaporateur 105 est totalement fermée et la voie de connexion avec le module de stockage est totalement fermée, la pompe 210 est en fonctionnement pour mettre en circulation le fluide frigorigène stocké dans le réservoir de stockage (200) vers le circuit de circulation fluidique. Le fluide frigorigène arrivant à l'évaporateur 108 est totalement issu du module de stockage.

Cette position est choisie lorsque la puissance de chaleur en entrée 11 du générateur 105 est inférieure à la valeur de consigne de production d'énergie frigorifique, plus précisément la puissance de chaleur en entrée 11 du générateur 105 est nulle. Ainsi, le fluide frigorigène stocké permet de fournir complètement la puissance nécessaire à l'évaporateur 108 pour produire l'énergie frigorifique au niveau de consigne.

La vanne trois voies 209 peut prendre une position de déstockage partiel dans laquelle la voie de connexion fluidique avec l'amont l'évaporateur 108 est au moins partiellement ouverte et la voie de connexion avec le module de stockage est préférentiellement fermée, la pompe 210 est en fonctionnement pour mettre en circulation le fluide frigorigène stocké dans le réservoir de stockage 200 vers le circuit de circulation fluidique. Le fluide frigorigène arrivant à l'évaporateur 108 est partiellement issu du module de stockage et partiellement issu du condenseur 107. Cette position est choisie lorsque la puissance de chaleur en entrée 11 du générateur 105 est inférieure à la valeur de consigne de production d'énergie frigorifique. Ainsi, le fluide frigorigène stocké permet de compléter la puissance nécessaire à l'évaporateur 108 pour produire l'énergie frigorifique au niveau de consigne.

Selon l'invention et selon les modes de réalisations des valeurs cibles ou de consignes sont définies notamment pour assurer un niveau de climatisation en particulier de l'habitacle du véhicule, satisfaisant.

Préférentiellement, l'utilisateur définit une valeur de consigne de climatisation qui est traduite notamment en valeur de consigne d'énergie frigorifique produite et/ou en valeur de consigne de puissance de chaleur en entrée du générateur 105 et/ou en valeur de consigne de puissance en entrée de l'évaporateur 106.

Le système selon l'invention quel que soit le mode de réalisation comprend des capteurs de température, de débit et autres moyens de mesure notamment en entrée et sortie d'au moins certains des différents composants décrits ci-dessus permettant au module de régulation de réguler la climatisation du dispositif.

Exemple :

Dans la suite sont détaillés les calculs d'ordre de grandeur des quantités d'eau liquide nécessaires pour la deuxième variante du premier mode de réalisation illustrée en figure 3 et la première variante du deuxième mode de réalisation illustrée en figure 4.

Supposant qu'il y a un débit nul du gaz d'échappement dans la ligne d'échappement 300, la variation de température moyenne du fluide de stockage telle que de l'eau dans le module de stockage avec deuxième variante du premier mode de réalisation illustrée en figure 3 peut s'estimer par :

$$mC_p \frac{d\overline{T_{eau,G}}}{dt} = -P_G - h_{amb}S(\overline{T_{eau,G}} - T_{amb})$$

De même, la variation de température moyenne du fluide de stockage telle que de l'eau dans le module de stockage avec la première variante du deuxième mode de réalisation illustrée en figure 4 peut s'estimer par :

$$mC_p \frac{d\overline{T_{eau,E}}}{dt} = -P_E - h_{amb}S(\overline{T_{eau,E}} - T_{amb})$$

Avec $P_G$ est la puissance cible à fournir au générateur, $P_E$ est la puissance cible de froid produite par l'évaporateur, $h_{amb}$ et S sont respectivement le coefficient et la surface d'échange thermique vers l'ambiance.

Le tableau ci-dessous résume les données d'entrée pour l'application numérique et les résultats :

| Cas | $P_G$ | $P_E$ | $\overline{T_{eau}}$ | $T_{amb}$ | $h_{amb}$ | S | Critère $d\overline{T} \overline{dt}$ | Masse d'eau nécessaire |
|---|---|---|---|---|---|---|---|---|
| | kW | kW | °C | °C | W/m$^2$/K | m$^2$ | °C/minutes | Kg |
| figure 3 | 4 | 2 | 150 | 30 | 10 | 0.3 | -10 | 6.3 |
| figure 4 | 4 | 2 | -5 | 30 | 10 | 0.3 | -10 | 3.0 |

Le critère $\frac{d\overline{T}}{dt}$ illustrant la variation de température dans l'élément de stockage en temps. A titre d'exemple, pour une application automobile, quand le véhicule est arrêté à un feu de signalisation, le moteur est coupé, il n'y a pas de débit de gaz d'échappement. Un refroidissement du fluide de stockage telle que de l'eau dans le module de stockage de 10°C/minute peut être accepté.

La première variante du deuxième mode de réalisation illustrée en figure 4 (stockage de froid) est plus intéressante que la deuxième variante du premier mode de réalisation illustrée en figure 3 (stockage de chaud) en termes de quantité d'eau nécessaire.

REFERENCES

1. Connexion fluidique entre l'absorbeur et la pompe à solution
2. Connexion fluidique entre la pompe à solution et l'économiseur
3. Connexion fluidique entre l'économiseur et le générateur
4. Connexion fluidique entre le générateur et l'économiseur
5. Connexion fluidique entre l'économiseur et le détendeur solution
6. Connexion fluidique entre le détendeur solution et l'absorbeur
7. Connexion fluidique entre le générateur et le condenseur
8. Connexion fluidique entre le condenseur et le détendeur réfrigérant
9. Connexion fluidique entre le détendeur réfrigérant et l'évaporateur
10. Connexion fluidique entre l'évaporateur et l'absorbeur
11. Entrée source chaude
12. Sortie source chaude

15. Entrée source chaude à refroidir
16. Sortie source chaude refroidie

20. Connexion fluidique d'entrée du générateur
21. Connexion fluidique de sortie du générateur
22. Connexion fluidique de piquage
23. Connexion fluidique d'entrée du générateur
24. Connexion fluidique de sortie du générateur
25. Circuit de fluide caloporteur
26. Connexion fluidique d'entrée du générateur
27. Connexion fluidique de sortie du générateur
28. Circuit de fluide frigoporteur
29. Circuit fluidique de dérivation
30. Connexion fluidique d'entrée du réservoir
31. Connexion fluidique de sortie du réservoir
101. Absorbeur
102. Pompe à solution
103. Economiseur
104. Détendeur solution
105. Générateur
106. Condenseur
107. Détendeur réfrigérant
108. Evaporateur

200. Réservoir de stockage
201. Pompe
202. Vanne trois voies
203. Pompe
204. Pompe
205. Echangeur
206. Pompe
207. Pompe
208. Echangeur
209. Vannes trois voies
210. Pompe

300. Ligne d'échappement des gaz
301. Conduite de circulation d'air

**Revendications**

1. Système comprenant

   - une ligne d'échappement des gaz (300) d'un moteur à combustion interne de véhicule et
   - un dispositif de climatisation comprenant une machine à absorption pour la production de froid comprenant un absorbeur (101), un générateur (105), un condenseur (106), un évaporateur (108) et un circuit de circulation fluidique apte à recevoir une solution de travail comprenant un fluide frigorigène et un absorbant, le circuit de circulation fluidique reliant le générateur (105) au condenseur (106), le condenseur (106) à l'évaporateur (108), l'évaporateur (108) à l'absorbeur (101) et l'absorbeur (101) au générateur (105) dans laquelle :

     ○ le générateur (105) est configuré pour vaporiser le fluide frigorigène de la solution de travail par transfert de chaleur d'une source de chaleur comprenant la chaleur fatale des gaz d'échappement d'un moteur à combustion interne destinés à circuler dans la ligne d'échappement des gaz (300)
     ○ le condenseur (106) est configuré pour condenser le fluide frigorigène à l'état de vapeur issu du générateur (105),
     ○ l'évaporateur (108) est configuré pour vaporiser le fluide frigorigène issu du condenseur (106) par transfert de chaleur d'une source de chaleur secondaire et produire une énergie frigorifique,

◦ l'absorbeur (101) est configuré pour condenser le fluide frigorigène à l'état de vapeur issu de l'évaporateur (108) pour permettre son absorption par la solution de travail,

- au moins un module de stockage thermique comprenant un réservoir de stockage (200), un fluide de stockage, le réservoir de stockage recevant le fluide de stockage, et un circuit de connexion fluidique assurant la connexion fluidique entre le réservoir de stockage (200) et le générateur (105), **caractérisé en ce que** le réservoir de stockage (200) est disposé en amont du générateur (105), et en conduction thermique de la ligne d'échappement des gaz (300) de sorte à stocker la chaleur fatale des gaz d'échappement en amont de la machine à absorption, le réservoir de stockage (200) étant traversé par la ligne d'échappement des gaz (300) pour un stockage direct de la chaleur fatale, et **en ce que** le système comprend :
- un module de régulation du module de stockage configuré pour réguler le stockage et le déstockage du fluide de stockage dans le module de stockage de sorte à fournir au générateur (105) une puissance de source de chaleur de consigne et/ou qu'une énergie frigorifique cible soit produite par l'évaporateur (108), le module de régulation comprenant au moins une pompe (201) et une vanne trois voies (202) agencées sur le circuit de connexion fluidique, la vanne trois voies (202) comprend une voie connectée fluidiquement au réservoir de stockage (200), une voie connectée fluidiquement à une entrée (11) du générateur (105) et une voie connectée fluidiquement à une sortie (12) du générateur (105) de sorte à réguler la température du fluide de stockage en entrée (11) du générateur (105) en contrôlant la proportion de fluide de stockage en provenance du réservoir de stockage (200) et la proportion de fluide de stockage en provenance de la sortie (12) du générateur (105).

**2.** Système selon la revendication précédente dans lequel la source de chaleur comprend un élément d'apport thermique complémentaire d'une énergie calorifique complémentaire à la chaleur fatale des gaz d'échappement.

**3.** Procédé d'utilisation d'un système selon l'une quelconque des revendications 1 à 2 dans lequel :

- le générateur (105) vaporise le fluide frigorigène de la solution de travail par transfert de chaleur de source de la chaleur comprenant la chaleur fatale de gaz d'échappement circulant dans la ligne d'échappement de gaz (300)
- le condenseur (106) condense le fluide frigorigène à l'état de vapeur issu du générateur (105),
- l'évaporateur (108) vaporise le fluide frigorigène issu du condenseur (106) par transfert de chaleur d'une source de chaleur secondaire et produit une énergie frigorifique,
- l'absorbeur (101) condense le fluide frigorigène à l'état de vapeur issu de l'évaporateur (108) pour permettre son absorption par l'absorbant,

**caractérisé en ce que** le procédé comprend :

• une étape de stockage du fluide de stockage par le au moins un module de stockage lorsqu'une puissance de la source de chaleur est supérieure à une puissance d'énergie frigorifique cible, et
• une étape de déstockage du fluide de stockage par le au moins un module de stockage lorsqu'une puissance de la source de chaleur est inférieure à une puissance d'énergie frigorifique cible.

**4.** Utilisation d'un système selon l'une quelconque des revendications 1 à 2 pour refroidir l'air d'un habitacle de véhicule.

**5.** Véhicule comprenant un moteur thermique à combustion interne et un système selon l'une quelconque des revendications 1 à 2.

**Patentansprüche**

**1.** System, umfassend

- eine Auspuffleitung für die Gase (300) eines Innenverbrennungsmotors eines Fahrzeugs, und
- eine Klimaanlagenvorrichtung, welche eine Absorptionsmaschine für die Kälteerzeugung umfasst, welche einen Absorber (101), einen Generator (105), einen Kondensator (106), einen Verdampfer (108) und einen Flüssigkeitszirkulationskreislauf umfasst, der imstande ist, eine Arbeitslösung aufzunehmen, die eine Kältemittelflüssigkeit und ein Absorptionsmittel umfasst, wobei der Flüssigkeitszirkulationskreislauf den Generator (105) mit dem Kondensator (106), den Kondensator (106) mit dem Verdampfer (108), den Verdampfer (108) mit dem Absorber (101), und den Absorber (101) mit dem Generator (105) verbindet, wobei:

∘ der Generator (105) konfiguriert ist, um die Kältemittelflüssigkeit der Arbeitslösung durch Wärmeübertragung aus einer Wärmequelle, die die Abwärme von Abgasen eines Innenverbrennungsmotors umfasst, die dazu bestimmt sind, in der Auspuffleitung für die Gase (300) zu zirkulieren, zu verdampfen
∘ der Kondensator (106) konfiguriert ist, um die aus dem Generator (105) stammende Kältemittelflüssigkeit im Dampfzustand zu kondensieren,
∘ der Verdampfer (108) konfiguriert ist, um die aus dem Kondensator (106) stammende Kältemittelflüssigkeit durch Wärmeübertragung aus einer Sekundärwärmequelle zu verdampfen und Kälteenergie zu erzeugen,
∘ der Absorber (101) konfiguriert ist, um die aus dem Verdampfer (108) stammende Kältemittelflüssigkeit im Dampfzustand zu kondensieren, um deren Absorption durch die Arbeitslösung zu ermöglichen,

- mindestens ein Wärmespeichermodul, welches einen Speichertank (200), eine Speicherflüssigkeit, wobei der Speichertank die Speicherflüssigkeit aufnimmt, und einen Flüssigkeitsanschlusskreislauf, der für den Flüssigkeitsanschluss zwischen dem Speichertank (200) und dem Generator (105) sorgt, umfasst, **dadurch gekennzeichnet, dass** der Speichertank (200) stromaufwärts des Generators (105), und derart wärmeleitend mit der Auspuffleitung für die Gase (300) angeordnet ist, um die Abwärme der Abgase stromaufwärts der Absorptionsmaschine zu speichern, wobei der Speichertank (200) durch die Auspuffleitung für die Gase (300) für eine direkte Speicherung der Abwärme durchquert wird, und dadurch, dass das System Folgendes umfasst:
- ein Modul zur Regelung des Speichermoduls, das konfiguriert ist, um die Einspeicherung und die Ausspeicherung der Speicherflüssigkeit in dem Speichermodul derart zu regeln, um dem Generator (105) eine Soll-Wärmequellenleistung bereitzustellen, und/oder dass eine Zielkälteenergie durch den Verdampfer (108) erzeugt wird, wobei das Modul zur Regelung mindestens eine Pumpe (201) und ein Dreiwege-Ventil (202) umfasst, die in dem Flüssigkeitsanschlusskreislauf angeordnet sind, wobei das Dreiwege-Ventil (202) einen Weg umfasst, der flüssigkeitstechnisch an den Speichertank (200) angeschlossen ist, einen Weg, der flüssigkeitstechnisch an einen Eingang (11) des Generators (105) angeschlossen ist, und einen Weg, der flüssigkeitstechnisch an einen Ausgang (12) des Generators (105) angeschlossen ist, um die Temperatur der Speicherflüssigkeit am Eingang (11) des Generators (105) durch Kontrollieren des Anteils der Speicherflüssigkeit aus dem Speichertank (200) und des Anteils der Speicherflüssigkeit vom Ausgang (12) des Generators (105) zu regeln.

2. System nach dem vorstehenden Anspruch, wobei die Wärmequelle ein ergänzendes Wärmezufuhrelement für eine Wärmeenergie ergänzend zur Abwärme der Abgase umfasst.

3. Verfahren zur Verwendung eines Systems nach einem der Ansprüche 1 bis 2, wobei:

- der Generator (105) die Kältemittelflüssigkeit der Arbeitslösung durch Quellenwärmeübertragung der Wärme, die die Abwärme eines Abgases umfasst, das in der Auspuffleitung für Gas (300) zirkuliert, verdampft
- der Kondensator (106) die aus dem Generator (105) stammende Kältemittelflüssigkeit im Dampfzustand kondensiert,
- der Verdampfer (108) die aus dem Kondensator (106) stammende Kältemittelflüssigkeit durch Wärmeübertragung aus einer Sekundärwärmequelle verdampft und Kälteenergie erzeugt,
- der Absorber (101) die aus dem Verdampfer (108) stammende Kältemittelflüssigkeit im Dampfzustand kondensiert, um deren Absorption durch das Absorptionsmittel zu ermöglichen,

**dadurch gekennzeichnet, dass** das Verfahren Folgendes umfasst:

• einen Schritt des Einpeicherns der Speicherflüssigkeit durch das mindestens eine Speichermodul, wenn eine Leistung der Wärmequelle größer als eine Zielkälteenergieleistung ist, und
• einen Schritt des Ausspeicherns der Speicherflüssigkeit durch das mindestens eine Speichermodul, wenn eine Leistung der Wärmequelle kleiner als eine Zielkälteenergieleistung ist.

4. Verwendung eines Systems nach einem der Ansprüche 1 bis 2 zum Kühlen der Luft eines Innenraums eines Fahrzeugs.

5. Fahrzeug, umfassend einen Verbrennungsmotor mit Innenverbrennung und ein System nach einem der Ansprüche 1 bis 2.

**Claims**

1. System comprising:

   - an exhaust gas line (300) of a vehicle internal combustion engine, and
   - an air conditioning device comprising an absorption machine for refrigeration comprising an absorber (101), a generator (105), a condenser (106), an evaporator (108) and a fluid flow circuit able to receive a working solution comprising a refrigerant fluid and an absorbent, the fluid flow circuit connecting the generator (105) to the condenser (106), the condenser (106) to the evaporator (108), the evaporator (108) to the absorber (101), and the absorber (101) to the generator (105), wherein:

   ◦ the generator (105) is configured to vaporise the refrigerant fluid of the working solution by transferring heat from a heat source comprising the unavoidable heat of exhaust gases of an internal combustion engine intended to flow through the exhaust gas line (300),
   ◦ the condenser (106) is configured to condense the refrigerant fluid in vapour state coming from the generator (105),
   ◦ the evaporator (108) is configured to vaporise the refrigerant fluid from the condenser (106) by heat transfer from a secondary heat source and generate cooling energy,
   ◦ the absorber (101) is configured to condense the refrigerant fluid in vapour state coming from the evaporator (108) for it to be absorbed by the working solution,

   - at least one thermal storage module comprising a storage tank (200), a storage fluid, the storage tank receiving the storage fluid, and a fluid connection circuit providing fluid connection between the storage tank (200) and the generator (105), **characterised in that** the storage tank (200) is disposed upstream of the generator (105), and in a thermal conduction with the exhaust gas line (300), so as to store the unavoidable heat of the exhaust gas upstream of the absorption machine, the storage tank (200) being traversed by the exhaust gas line (300), for direct storage of the unavoidable heat, and **in that** the system comprises:
   - a control module of the storage module configured to control the storage and release of the storage fluid in the storage module, such that a desired heat source power is delivered to the generator (105) and/or a target cooling energy is generated by the evaporator (108), the control module comprising at least a pump (201) and a three-way valve (202) arranged on the fluid connection circuit, the three-way valve (202) comprises a path fluidically connected to the storage tank (200), a path fluidically connected to an inlet (11) of the generator (105) and a path fluidically connected to an outlet (12) of the generator (105), so as to control the temperature of the storage fluid at the inlet (11) of the generator (105) by controlling the proportion of storage fluid coming from the storage tank (200) and the proportion of storage fluid coming from the outlet (12) of the generator (105).

2. System according to the preceding claim wherein the heat source comprises an additional heat input element providing heat energy in addition to the unavoidable heat of the exhaust gas.

3. Method for using a system according to any one of claims 1 to 2 wherein:

   - the generator (105) vaporises the refrigerant fluid of the working solution by source heat transfer of the heat comprising the exhaust gas unavoidable heat flowing in the exhaust gas line (300),
   - the condenser (106) condenses the refrigerant fluid in vapour state coming from the generator (105),
   - the evaporator (108) vaporises the refrigerant fluid from the condenser (106) by transferring heat from a secondary heat source and generates a cooling energy,
   - the absorber (101) condenses the refrigerant fluid in vapour state coming from the evaporator (108) for it to be absorbed by the absorbent,

   **characterised in that** the method comprises:

   • a step of storing the storage fluid by the at least one storage module when a power of the heat source is greater than a target cooling energy power, and
   • a step of releasing the storage fluid by the at least one storage module when a power of the heat source is lower than a target cooling energy power.

4. Use of a system according to any one of claims 1 to 2 for cooling the air of a vehicle interior.

**5.** Vehicle comprising a thermal internal combustion engine and a system according to any one of claims 1 to 2.

FIG. 1

FIG. 2

FIG. 3

FIG. 4

FIG. 5

**RÉFÉRENCES CITÉES DANS LA DESCRIPTION**

**Documents brevets cités dans la description**

- DE 4307363 A1

**Littérature non-brevet citée dans la description**

- **KOEHLER et al.** Absorption refrigeration system for mobile applications utilizing exhaust gases. *Heat and Mass Transfer,* 1997, vol. 32, 333-340